# EUROPEAN PATENT APPLICATION

(11) **EP 4 615 032 A1**
(43) Date of publication of application: **10.09.2025**
(21) Application number: 22964153.5
(22) Date of filing: 06.11.2022
(51) Int. Cl.: H04W 24/02, H04L 27/00

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/130180
(87) International publication number: WO 2024/092852

(57) **Abstract**

The present disclosure relates to a communication method and apparatus, and a storage medium. The communication method is applied to a core network device, and the core network device is a providing node for an AI model. The communication method comprises: sending an AI model to a terminal, wherein the terminal is a node which uses the AI model for inference. The present disclosure provides a feasible solution for providing an AI model for a node which uses the AI model for inference.

## Description

### TECHNICAL FIELD

The present disclosure relates to the field of communication technology, and in particular to a communication method, apparatus, and storage medium.

### BACKGROUND

In recent years, Artificial Intelligence (AI) technology has made continuous breakthroughs in many fields. While integrating knowledge from different disciplines, the AI technology has also provided new directions and methods for the development of different disciplines.

In related technologies, there are multiple communication devices in the communication system, such as core network device, wireless access network device, and terminal. The communication system supports communication between different communication devices based on AI models. However, communication based on AI models includes AI-providing nodes *(i.e.,* nodes that provide AI models) and AI-reasoning nodes *(i.e.,* nodes that use AI models for reasoning). When the AI-providing node and the AI-reasoning node are located in different communication devices, there is a need to transmit the AI model from one communication device to another communication device.

### SUMMARY

In order to overcome the problems existing in the related art, the present disclosure provides a communication method, apparatus, and storage medium.

According to a first aspect of the embodiments of the present disclosure, a communication method is provided, including:
sending an AI model to a terminal, where the terminal is a node that uses the AI model for reasoning.

In an embodiment, sending the AI model to the terminal includes: sending the AI model to the terminal based on a first transmission protocol, where the first transmission protocol is a transmission protocol for communication between the core network device and the terminal.

In an embodiment, sending the AI model to the terminal based on the first transmission protocol includes: encapsulating the AI model based on the first transmission protocol, and sending the encapsulated AI model to the terminal.

In an embodiment, the first transmission protocol includes a Non-Access Stratum (NAS) signaling protocol and/or a User Plane (UP) protocol.

In an embodiment, the providing node for the AI model is located at a Network Data Analytics Function (NWDAF); and sending the AI model to the terminal based on the first transmission protocol includes: the NWDAF sending the AI model to an Acess and Mobility Management Function (AMF) based on the second transmission protocol, and the AMF encapsulating the AI model based on the NAS signaling protocol and sending the encapsulated AI model to the terminal; or the NWDAF sending the AI model to Operation Administration and Maintenance (OAM) based on the third transmission protocol, the OAM sending the AI model to the AMF based on the fourth transmission protocol, and the AMF encapsulating the AI model based on the NAS signaling protocol and sending the encapsulated AI model to the terminal; or the NWDAF sending the AI model to the User Plane Function (UPF) based on the fifth transmission protocol, and the UPF encapsulating the AI model based on the UP protocol and sending the encapsulated AI model to the terminal. The second transmission protocol is the transmission protocol for communication between the NWDAF and the AMF. The third transmission protocol is the transmission protocol for communication between the NWDAF and the OAM. The fourth transmission protocol is the transmission protocol for communication between the OAM and the AMF. The fifth transmission protocol is the transmission protocol for communication between the NWDAF and the UPF.

In an embodiment, the providing node for the AI model is located at OAM; and sending the AI model to the terminal based on the first transmission protocol includes: the OAM sending the AI model to AMF based on the fourth transmission protocol, and the AMF encapsulating the AI model based on the NAS signaling protocol and sending the encapsulated AI model to the terminal; or the OAM sending the AI model to UPF based on the sixth transmission protocol, and the UPF encapsulating the AI model based on the UP protocol and sending the encapsulated AI model to the terminal. The fourth transmission protocol is the transmission protocol for communication between the OAM and the AMF. The sixth transmission protocol is the transmission protocol for communication between the OAM and the UPF.

In an embodiment, sending the AI model to the terminal includes: sending the AI model to the wireless access network device based on the seventh transmission protocol. The seventh transmission protocol is the transmission protocol for communication between the core network device and the wireless access network device. The AI model is sent to the terminal by the wireless access network device.

In an embodiment, sending the AI model to the wireless access network device includes: encapsulating the AI model based on the seventh transmission protocol, and sending the encapsulated AI model to the wireless access network device.

According to a second aspect of the embodiments of the present disclosure, a communication method is provided, including:
receiving the AI model sent by the core network device, where the core network device is the providing node for the AI model.

In an embodiment, receiving the AI model sent by the core network device includes: receiving the AI model sent by the core network device based on the first transmission protocol, where the first transmission protocol is a transmission protocol for communication between the core network device and the terminal.

In an embodiment, the first transmission protocol includes a NAS signaling protocol and/or a UP protocol.

In an embodiment, the providing node for the AI model is located at NWDAF; and receiving the AI model sent by the core network device based on the first transmission protocol includes: receiving the AI model encapsulated and sent by the AMF based on the NAS signaling protocol, where the AI model is sent to the AMF by the NWDAF, or forwarded from the NWDAF to the AMF by the OAM; or receiving the AI model encapsulated and sent by the UPF based on the User Plane (UP) protocol, where the AI model is sent to the UPF by the NWDAF.

In an embodiment, the providing node for the AI model is located at OAM; and receiving the AI model sent by the core network device based on the first transmission protocol includes: receiving the AI model encapsulated and sent by the AMF based on the NAS signaling protocol, where the AI model is sent to the AMF by the OAM; or receiving the AI model encapsulated and sent by the UPF based on the UP protocol, where the AI model is sent to the UPF by the OAM.

In an embodiment, receiving the AI model sent by the core network device includes: receiving the AI model sent by the wireless access network device, where the AI model is sent to the wireless access network device by the core network device.

In an embodiment, receiving the AI model sent by the wireless access network device includes: receiving the air interface protocol signaling sent by the wireless access network device, where the air interface protocol signaling carries the AI model.

In an embodiment, the air interface protocol signaling includes at least one of the following: physical layer signaling; logical access layer MAC signaling; Radio Resource Control (RRC) signaling; or air interface user plane signaling.

According to a third aspect of the embodiments of the present disclosure, a communication method is provided, including:
receiving an AI model, where the AI model is sent by the core network device, the core network device is the providing node for the AI model; and
sending the AI model to a terminal, where the terminal is a node that uses the AI model for reasoning.

In an embodiment, receiving the AI model includes: receiving the AI model sent by the core network device based on the seventh transmission protocol, where the seventh transmission protocol is a transmission protocol for communication between the core network device and the wireless access network device.

In an embodiment, sending the AI model to the terminal includes: sending the air interface protocol signaling to the terminal, where the air interface protocol signaling carries the AI model.

According to a fourth aspect of the embodiments of the present disclosure, a communication apparatus is provided, including:
a sending unit, configured to send the AI model to the terminal, where the terminal is a node that uses the AI model for reasoning.

In an embodiment, the sending unit is configured to send the AI model to the terminal in the following way: sending the AI model to the terminal based on the first transmission protocol, where the first transmission protocol is a transmission protocol for communication between the core network device and the terminal.

In an embodiment, the sending unit is configured to send the AI model to the terminal based on the first transmission protocol in the following way: encapsulating the AI model based on the first transmission protocol, and sending the encapsulated AI model to the terminal.

In an embodiment, the first transmission protocol includes a Non-Access Stratum (NAS) signaling protocol and/or a User Plane (UP) protocol.

In an embodiment, the providing node for the AI model is located at NWDAF; and the sending unit is configured to send the AI model to the terminal based on the first transmission protocol in the following way: the NWDAF sending the AI model to the AMF based on the second transmission protocol, and the AMF encapsulating the AI model based on the Non-Access Stratum (NAS) signaling protocol and sending the encapsulated AI model to the terminal; or the NWDAF sending the AI model to the OAM based on the third transmission protocol, the OAM sending the AI model to the AMF based on the fourth transmission protocol, and the AMF encapsulating the AI model based on the NAS signaling protocol and sending the encapsulated AI model to the terminal; or the NWDAF sending the AI model to the User Plane Function (UPF) based on the fifth transmission protocol, and the UPF encapsulating the AI model based on the UP protocol and sending the encapsulated AI model to the terminal. The second transmission protocol is the transmission protocol for communication between the NWDAF and the AMF. The third transmission protocol is the transmission protocol for communication between the NWDAF and the OAM. The fourth transmission protocol is the transmission protocol for communication between the OAM and the AMF. The fifth transmission protocol is the transmission protocol for communication between the NWDAF and the UPF.

In an embodiment, the providing node for the AI model is located at OAM; and the sending unit is configured to send the AI model to the terminal based on the first transmission protocol in the following way: the OAM sending the AI model to the AMF based on the fourth transmission protocol, and the AMF encapsulating the AI model based on the NAS signaling protocol and sending the encapsulated AI model to the terminal; or the OAM sending the AI model to the UPF based on the sixth transmission protocol, and the UPF encapsulating the AI model based on the UP protocol and sending the encapsulated AI model to the terminal. The fourth transmission protocol is the transmission protocol for communication between the OAM and the AMF. The sixth transmission protocol is the transmission protocol for communication between the OAM and the UPF.

In an embodiment, the sending unit is configured to send the AI model to the terminal in the following way: sending the AI model to the wireless access network device based on the seventh transmission protocol, where the seventh transmission protocol is the transmission protocol for communication between the core network device and the wireless access network device, and the AI model is sent to the terminal by the wireless access network device.

In an embodiment, the sending unit is configured to send the AI model to the wireless access network device in the following way: encapsulating the AI model based on the seventh transmission protocol, and sending the encapsulated AI model to the wireless access network device.

According to a fifth aspect of the embodiments of the present disclosure, a communication apparatus is provided, including:
a receiving unit, configured to receive an AI model sent by a core network device, where the core network device is a providing node for the AI model.

In an embodiment, the receiving unit is configured to receive the AI model sent by the core network device in the following way: receiving the AI model sent by the core network device based on the first transmission protocol, where the first transmission protocol is the transmission protocol for communication between the core network device and the terminal.

In an embodiment, the first transmission protocol includes a Non-Access Stratum (NAS) signaling protocol and/or a UP protocol.

In an embodiment, the providing node for the AI model is located at NWDAF; and the receiving unit is configured to receive the AI model sent by the core network device based on the first transmission protocol in the following way: receiving the AI model encapsulated and sent by the AMF based on the NAS signaling protocol, where the AI model is sent to the AMF by the NWDAF, or forwarded from the NWDAF to the AMF by the OAM; or receiving the AI model encapsulated and sent by the UPF based on the User Plane (UP) protocol, where the AI model is sent to the UPF by the NWDAF.

In an embodiment, the providing node for the AI model is located at OAM; and the receiving unit is configured to receive the AI model sent by the core network device based on the first transmission protocol in the following way: receiving the AI model encapsulated and sent by the AMF based on the NAS signaling protocol, where the AI model is sent to the AMF by the OAM; or receiving the AI model encapsulated and sent by the UPF based on the UP protocol, where the AI model is sent to the UPF by the OAM.

In an embodiment, the receiving unit is configured to receive the AI model sent by the core network device in the following way: receiving the AI model sent by the wireless access network device, where the AI model is sent to the wireless access network device by the core network device.

In an embodiment, the receiving unit is configured to receive the AI model sent by the wireless access network device in the following way: receiving the air interface protocol signaling sent by the wireless access network device, where the air interface protocol signaling carries the AI model.

In an embodiment, the air interface protocol signaling includes at least one of the following: physical layer signaling; logical access layer MAC signaling; Radio Resource Control (RRC) signaling; or air interface user plane signaling.

According to a sixth aspect of the embodiments of the present disclosure, a communication apparatus is provided, including:
a receiving unit, configured to receive an AI model, where the AI model is sent by the core network device, and the core network device is a providing node for the AI model; and
a sending unit, configured to send the AI model to a terminal, where the terminal is a node that uses the AI model for reasoning.

In an embodiment, the receiving unit is configured to receive the AI model in the following way: receiving the AI model sent by the core network device based on the seventh transmission protocol, where the seventh transmission protocol is the transmission protocol for communication between the core network device and the wireless access network device.

In an embodiment, the sending unit is configured to send the AI model to the terminal in the following way: sending the air interface protocol signaling to the terminal, where the air interface protocol signaling carries the AI model.

According to a seventh aspect of the embodiments of the present disclosure, a communication system is provided, including a terminal, a wireless access network device, and a core network device.

The core network device is configured to perform the method described in any embodiment of the first aspect.

The terminal is configured to perform the method described in any embodiment of the second aspect.

The wireless access network device is configured to perform the method described in any embodiment of the third aspect.

According to a eighth aspect of the embodiments of the present disclosure, a communication device is provided, including:
a processor; and a memory having processor-executable instructions stored therein, where the processor is configured to perform the method described in any embodiment of the first aspect.

According to a ninth aspect of the embodiments of the present disclosure, a communication device is provided, including:
a processor; and a memory having processor-executable instructions stored therein, where the processor is configured to perform the method described in any embodiment of the second aspect.

According to a tenth aspect of the embodiments of the present disclosure, a communication device is provided, including:
a processor; and a memory having processor-executable instructions stored therein, where the processor is configured to perform the method described in any embodiment of the third aspect.

According to an eleventh aspect of the embodiments of the present disclosure, a storage medium is provided, having instructions stored therein. When the instructions in the storage medium are executed by the processor, the processor is enabled to perform the communication method described in any embodiment of the first aspect.

According to a twelfth aspect of the embodiments of the present disclosure, a storage medium is provided, having instructions stored therein. When the instructions in the storage medium are executed by the processor, the processor is enabled to perform the communication method described in any embodiment of the second aspect.

According to a thirteenth aspect of the embodiments of the present disclosure, a storage medium is provided, having instructions stored therein. When the instructions in the storage medium are executed by the processor, the processor is enabled to perform the communication method described in any embodiment of the third aspect.

The technical solution provided by the embodiments of the present disclosure may include the following beneficial effects. For a scenario where the providing node for the AI model is located at the core network device, and the node that uses the AI model for reasoning is located at the terminal, the core network device can send the AI model to the terminal so that the terminal receives the AI model. In this case, the terminal can subsequently perform the reasoning task by the received AI model.

It should be understood that the above general description and the detailed description below are only exemplary and explanatory, and cannot limit the present disclosure.

### BRIEF DESCRIPTION OF THE DRAWINGS

The drawings herein are incorporated into and constitute a part of the specification, illustrate embodiments consistent with the present disclosure, and are used together with the specification to explain the principles of the present disclosure.
Fig. 1 is a schematic diagram of a communication system according to an example embodiment.
Fig. 2 is a flow chart of a communication method according to an example embodiment.
Fig. 3 is a flow chart of another communication method according to an example embodiment.
Fig. 4 is a flow chart of another communication method according to an example embodiment.
Fig. 5 is a flow chart of another communication method according to an example embodiment.
Fig. 6 is a flow chart of another communication method according to an example embodiment.
Fig. 7 is a flow chart of another communication method according to an example embodiment.
Fig. 8 is a flow chart of another communication method according to an example embodiment.
Fig. 9 is a flow chart of another communication method according to an example embodiment.
Fig. 10 is a flow chart of another communication method according to an example embodiment.
Fig. 11 is a flow chart of another communication method according to an example embodiment.
Fig. 12 is a flow chart of another communication method according to an example embodiment.
Fig. 13 is a flow chart of another communication method according to an example embodiment.
Fig. 14 is a flow chart of another communication method according to an example embodiment.
Fig. 15 is a flow chart of another communication method according to an example embodiment.
Fig. 16 is a flow chart of a communication method according to an example embodiment.
Fig. 17 is a flow chart of another communication method according to an example embodiment.
Fig. 18 is a flow chart of another communication method according to an example embodiment.
Fig. 19 is a flow chart of another communication method according to an example embodiment.
Fig. 20 is a flow chart of another communication method according to an example embodiment.
Fig. 21 is a schematic diagram of interactions between the core network device and the terminal according to an example embodiment.
Fig. 22 is a schematic diagram of interactions between another core network device and the terminal according to an example embodiment.
Fig. 23 is a block diagram of a communication apparatus according to an example embodiment.
Fig. 24 is a block diagram of a communication apparatus according to an example embodiment.
Fig. 25 is a block diagram of a communication apparatus according to an example embodiment.
Fig. 26 is a block diagram of a communication device according to an example embodiment.
Fig. 27 is a block diagram of a communication device according to an example embodiment.

### DETAILED DESCRIPTION OF THE EMBODIMENTS

The example embodiments will be described in detail here, and instances thereof are shown in the accompanying drawings. When the following description refers to the drawings, unless otherwise indicated, the same numbers in different drawings represent the same or similar elements. The implementations described in the following example embodiments do not represent all the implementations consistent with the present disclosure.

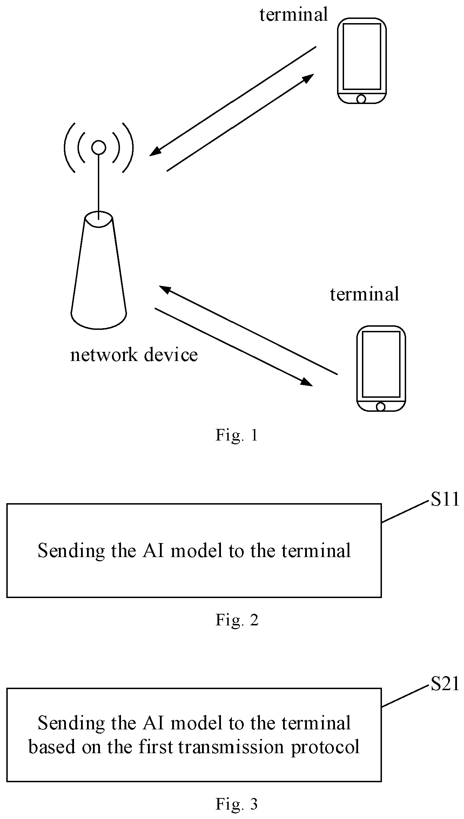

It shall be understood that the wireless communication system shown in Fig. 1 is only for schematic illustration. The wireless communication system may also include other network devices, such as core network devices, wireless relay devices, and wireless backhaul devices, which are not shown in Fig. 1. The embodiments of the present disclosure do not limit the number of network devices and the number of terminals included in the wireless communication system.

It shall be further understood that the wireless communication system in the embodiments of the present disclosure is a network that provides wireless communication functions. The wireless communication system may use different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier-Frequency Division Multiple Access (SC-FDMA), and Carrier Sense Multiple Access with Collision Avoidance. According to the capacity, rate, latency, and other factors of different networks, the network may be divided into 2G network, 3G network, 4G network, or future evolution network, such as 5G network. The 5G network may also be called New Radio (NR). For the convenience of description, the present disclosure sometimes refers to the wireless communication network by the abbreviated network.

Furthermore, the network device involved in the present disclosure may also be called wireless access network device. The wireless access network device may be a base station, an evolved node B, a home base station, an Access Point (AP) in a Wireless Fidelity (WIFI) system, a wireless relay node, a wireless backhaul node, a Rransmission Point (TP), or a Rransmission and Reception Point (TRP), etc. It may also be a gNB in an NR system, or a component or a part of a base station. It should be understood that in the embodiments of the present disclosure, the specific technology and the specific device form adopted by the network device are not limited. In the present disclosure, the network device may provide communication coverage for a specific geographical area and may communicate with a terminal located in the coverage area (cell). In addition, when it is a vehicle-to-everything (V2X) communication system, the network device may also be a vehicle-mounted device.

Furthermore, the terminal involved in the present disclosure may also be referred to as a terminal device, a User Equipment (UE), a Mobile Station (MS), a Mobile Terminal (MT), etc., which is a device that provides voice and/or data connectivity to users. For example, the terminal may be a handheld device or a vehicle-mounted device with wireless connection function, etc. At present, some examples of terminals are a Mobile Phone, a Customer Premise Equipment (CPE), a Pocket Personal Computer (PPC), a handheld computer, a Personal Digital Assistant (PDA), a laptop, a tablet computer, a wearable device, or a vehicle-mounted device, etc. In addition, when it is a vehicle-to-everything (V2X) communication system, the terminal device may also be a vehicle-mounted device. It should be understood that the embodiments of the present disclosure do not limit the specific technology and the specific device form adopted by the terminal.

At present, in the relevant technology, for the research on wireless AI technology, the business cases for AI may include, for example, AI-based channel state information (CSI) enhancement, AI-based beam association, AI-based positioning, etc.

There are two very important stages involved in AI activities (operations). For example, the first stage may be the training stage of the AI model, that is, the stage of acquiring the AI model. The second stage may be the deployment stage of the AI model, that is, the reasoning application stage of the AI model. For the deployment stage, it is necessary to pre-configure the providing node and the reasoning node in the communication device. The providing node refers to the node that provides the trained AI model, and the reasoning node refers to the node that performs the reasoning task based on the AI model. The same communication system often involves multiple communication devices, and the communication device often involves multiple processing nodes for communication based on the AI model. Therefore, for multiple communication devices involved in the communication system, the configuration of the processing node is diverse. For example, the providing node and the reasoning node may be configured on the same communication device. Alternatively, the providing node and the reasoning node may be configured on different communication devices.

For the scenario where the providing node and the reasoning node are located in different communication devices, the communication device carrying the reasoning node needs the AI model provided by the communication device carrying the providing node. Therefore, in the related technology, there is a transmission demand for transmitting the AI model from one communication device to another communication device.

In view of above, the present disclosure provides a communication method, which is intended to send the AI model from the providing node for the AI model to the node that uses the AI model for reasoning in a scenario where the node that uses the AI model for reasoning and the providing node for the AI model are located at different devices. For example, when the providing node for the AI model is located at the core network device and the node that uses the AI model for reasoning is located at the terminal, the AI model is transmitted from the core network device to the terminal, so that the terminal can perform the reasoning task according to the received AI model.

Fig. 2 is a flow chart of a communication method according to an example embodiment. As shown in Fig. 2, the communication method is used in the core network device and includes the following step(s).

In step S11, the AI model is sent to the terminal.

In the embodiments of the present disclosure, the terminal carries a node that uses the AI model for reasoning, and the core network device sends the AI model to the terminal, so that the terminal carrying the node that uses the AI model for reasoning can smoothly perform the reasoning task based on the AI model.

In a feasible implementation, the AI model may be transmitted between the core network device and the terminal through a pre-configured transmission protocol. For the convenience of description below, the transmission protocol for communication between the core network device and the terminal is referred to as the first transmission protocol.

Fig. 3 is a flow chart of another communication method according to an example embodiment, as shown in Fig. 3, including the following step(s).

In step S21, the AI model is sent to the terminal based on the first transmission protocol.

In an embodiment of the present disclosure, the core network device sends the AI model according to the first transmission protocol. Correspondingly, the terminal may receive the AI model according to the first transmission protocol.

For example, before the core network device sends the AI model, the AI model may be encapsulated based on the first transmission protocol. For example, the core network device encapsulates the AI model based on the first transmission protocol and sends the encapsulated AI model to the terminal.

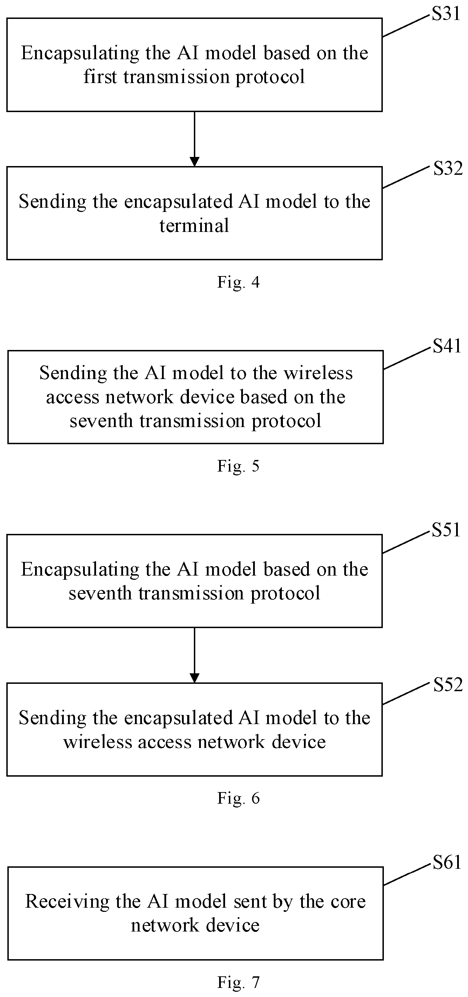

Fig. 4 is a flow chart of another communication method according to an example embodiment, as shown in Fig. 4, including the following step(s).

In step S31, the AI model is encapsulated based on the first transmission protocol.

In step S32, the encapsulated AI model is sent to the terminal.

In an embodiment of the present disclosure, the first transmission protocol for communication between the core network device and the terminal may be, for example, a Non-Access Stratum (NAS) signaling protocol and/or a User Plane (UP) protocol. The core network device may select any transmission protocol to encapsulate the AI model, and send the encapsulated AI model to the terminal according to the first transmission protocol.

In an embodiment of the present disclosure, the providing node for the AI model may be located at different core network devices. For example, it may be located at the Network Data Analytics Function (NWDAF) or the Operation Administration and Maintenance (OAM). Accordingly, the step of sending the AI model to the terminal involved in the above embodiment(s) may be performed, for example, by NWDAF or OAM.

For example, if the providing node is located at NWDAF, the transmission of the AI model may be achieved in the following ways.

For example, the AI model may be sent by NWDAF to the wireless access network device and the Access and Mobility Management Function (AMF) device. The AMF may encapsulate the AI model based on the NAS signaling protocol, and send the encapsulated AI model to the terminal.

For another example, the AI model may be sent by NWDAF to OAM, and then the AI model may be sent by OAM to AMF, and the AMF may encapsulate the AI model based on the NAS signaling protocol and send the encapsulated AI model to the terminal.

Alternatively, the NWDAF may send the AI model to the User Plane Function (UPF) device, and the UPF may encapsulate the AI model based on the UP protocol and send the encapsulated AI model to the terminal.

Accordingly, if the providing node is located at OAM, the transmission of the AI model may be implemented in the following ways.

For example, the OAM may send the AI model to the AMF, and the AMF may encapsulate the AI model based on the NAS signaling protocol and send the encapsulated AI model to the terminal. For another example, the OAM may send the AI model to the UPF, and the UPF may encapsulate the AI model based on the UP protocol and send the encapsulated AI model to the terminal.

In the above embodiment(s), when different core network devices communicate with each other, the transmission protocols used are different. For the convenience of distinction, the present disclosure refers to the transmission protocol for communication between NWDAF and AMF as the second transmission protocol, the transmission protocol for communication between NWDAF and OAM as the third transmission protocol, the transmission protocol for communication between OAM and AMF as the fourth transmission protocol, the transmission protocol for communication between NWDAF and UPF as the fifth transmission protocol, and the transmission protocol for communication between OAM and UPF as the sixth transmission protocol.

In an embodiment of the present disclosure, in addition to the core network device directly transmitting the AI model to the terminal, the AI model sent by the core network device may also be forwarded to the terminal through the wireless access network device. For the convenience of description below, the transmission protocol for communication between the core network device and the wireless access network device is referred to as the seventh transmission protocol.

Fig. 5 is a flow chart of another communication method according to an example embodiment, as shown in Fig. 5, including the following step(s).

In step S41, the AI model is sent to the wireless access network device based on the seventh transmission protocol.

In an embodiment of the present disclosure, when the wireless access network device receives the AI model, the AI model may be sent to the terminal by the wireless access network device. In other words, in an embodiment of the present disclosure, the core network device sends the encapsulated AI model to the wireless access network device, and further the wireless access network device sends the encapsulated AI model to the terminal.

In an embodiment of the present disclosure, the encapsulated AI model may be re-encapsulated by the wireless access network device and sent to the terminal. Specifically, the wireless access network device re-encapsulates the received AI model and sends the re-encapsulated AI model to the terminal.

Fig. 6 is a flow chart of another communication method according to an example embodiment, as shown in Fig. 6, including the following step(s).

In step S51, the AI model is encapsulated based on the seventh transmission protocol.

In step S52, the encapsulated AI model is sent to the wireless access network device.

In the communication method provided by the present disclosure, the communication interface between the core network device and the wireless access network device may be, for example, a dedicated communication interface between the wireless access network device and the AMF. For another example, it may also be a dedicated communication interface between the wireless access network device and the UPF.

In an embodiment of the present disclosure, the encapsulated AI model is re-encapsulated by the wireless access network device and sent to the terminal. For example, the encapsulated AI model may be re-encapsulated by the wireless access network device based on the air interface protocol signaling and sent to the terminal.

For example, the air interface protocol signaling includes at least one of physical layer signaling, logical access layer (Medium Access Control, MAC) signaling, Radio Resource Control (RRC) signaling, and air interface user plane signaling.

Based on the same concept, the present disclosure provides another communication method, which is performed by the terminal and is used to interact with the core network device involved in any of the above embodiments to complete the transmission of the AI model. If there is any ambiguity in the following embodiments, references may be made to any of the above embodiments. Similarly, if there is any ambiguity in the above embodiments, references may be made to any of the following embodiments.

Fig. 7 is a flow chart of another communication method according to an example embodiment. As shown in Fig. 7, the communication method is performed by the core network device, including the following step(s).

In step S61, the AI model sent by the core network device is received.

The core network device is the providing node for the AI model.

In a feasible implementation, the AI model may be transmitted between the core network device and the terminal based on a pre-configured first transmission protocol.

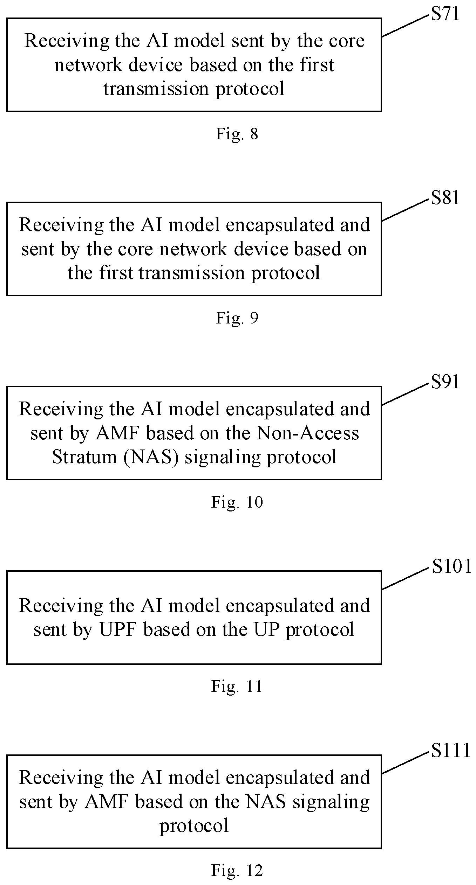

Fig. 8 is a flow chart of another communication method according to an example embodiment, as shown in Fig. 8, including the following step(s).

In step S71, based on the first transmission protocol, the AI model sent by the core network device is received.

In an embodiment of the present disclosure, the first transmission protocol is the transmission protocol for communication between the core network device and the terminal, and the core network device sends the AI model according to the first transmission protocol. Correspondingly, the terminal receives the AI model according to the first transmission protocol.

For example, before the core network device sends the AI model, the AI model may be encapsulated based on the transmission protocol.

Fig. 9 is a flow chart of another communication method according to an example embodiment, as shown in Fig. 9, including the following step(s).

In step S81, based on the first transmission protocol, the AI model encapsulated and sent by the core network device is received.

According to the method provided by an embodiment of the present disclosure, the terminal may receive, through the first transmission protocol, the AI model encapsulated and sent by the core network device based on the first transmission protocol. In this case, the encapsulated AI model may be parsed to obtain the AI model to be used.

For example, the first transmission protocol for communication between the core network device and the terminal may include, for example, the NAS signaling protocol and/or the UP protocol.

In an embodiment of the present disclosure, the providing node for the AI model may be located at the NWDAF, for example. In the case where the providing node for the AI model is located at the NWDAF, several feasible ways for transmitting the AI model are provided below.

Fig. 10 is a flow chart of another communication method according to an example embodiment, as shown in Fig. 10, including the following step(s).

In step S91, the AI model encapsulated and sent by AMF based on the Non-Access Stratum (NAS) signaling protocol is received.

In an embodiment of the present disclosure, the AI model may be sent by NWDAF to AMF. For example, NWDAF transmits the AI model directly to AMF, so that AMF further sends the AI model to the terminal. It shall be noted that the AI model may also be forwarded from NWDAF to AMF by OAM. For example, NWDAF sends the AI model to OAM, and OAM sends the AI model to AMF, and then AMF sends the AI model to the terminal.

Fig. 11 is a flow chart of another communication method according to an example embodiment, as shown in Fig. 11, including the following step(s).

In step S101, the AI model encapsulated and sent by UPF based on the UP protocol is received.

The AI model is sent by NWDAF to UPF.

It shall be noted that the providing node for the AI model may also be located at OAM in addition to the providing node for the AI model. For the case where the providing node for the AI model is located at OAM, several feasible ways for transmitting the AI model are provided below.

Fig. 12 is a flow chart of another communication method according to an example embodiment, as shown in Fig. 12, including the following step(s).

In step S111, the AI model encapsulated and sent by AMF based on the NAS signaling protocol is received.

In an embodiment of the present disclosure, OAM transmits the AI model to AMF, and then enables AMF to encapsulate the AI model using the NAS signaling protocol and to send the encapsulated AI model to the terminal.

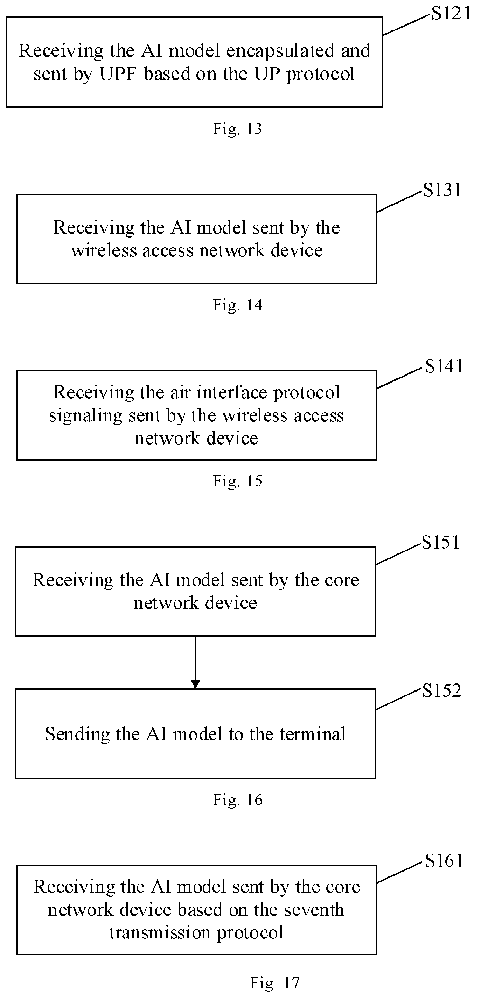

Fig. 13 is a flow chart of another communication method according to an example embodiment, as shown in Fig. 13, including the following step(s).

In step S121, the AI model encapsulated and sent by UPF based on the UP protocol is received.

The AI model is sent to UPF by OAM.

In an embodiment of the present disclosure, OAM transmits the AI model to UPF, and then enables UPF to encapsulate the AI model using the UP protocol and to send the encapsulated AI model to the terminal.

In a feasible implementation, the wireless access network device may forward the AI model from the core network device to the terminal.

Fig. 14 is a flow chart of another communication method according to an example embodiment, as shown in Fig. 14, including the following step(s).

In step S131, the AI model sent by the wireless access network device is received.

In an embodiment of the present disclosure, the AI model may be encapsulated by the core network device and sent to the wireless access network device. Accordingly, the wireless access network device may parse the AI model and re-encapsulate it, and further forward the AI model to the terminal, so that the terminal receives the AI model to perform the reasoning task based on the AI model.

In an embodiment, the AI model may be carried in the air interface protocol signaling, and the terminal may receive the AI model by receiving the air interface protocol signaling.

Fig. 15 is a flow chart of another communication method according to an example embodiment, as shown in Fig. 15, including the following step(s).

In step S141, the air interface protocol signaling sent by the wireless access network device is received.

In an embodiment of the present disclosure, the air interface protocol signaling carries the AI model, and the terminal may acquire the AI model by receiving the air interface protocol signaling.

According to the communication method provided by an embodiment of the present disclosure, there may be multiple communication interfaces between the core network device and the wireless access network device, for example, a dedicated communication interface between the wireless access network device and the AMF, and a dedicated communication interface between the wireless access network device and the UPF. In an embodiment, the wireless access network may receive the AI model through any of the above communication interfaces.

In an embodiment of the present disclosure, the encapsulated AI model may be re-encapsulated by the wireless access network device and sent to the terminal. For example, it may be re-encapsulated by the wireless access network device based on the air interface protocol signaling and sent to the terminal.

For example, the air interface protocol signaling includes at least one of the physical layer signaling, the logical access layer (Medium Access Control, MAC) signaling, the Radio Resource Control (RRC) signaling, and the air interface user plane signaling.

Based on the same concept, the present disclosure provides another communication method, which is performed by the wireless access network device, and is used to interact with the core network device and the terminal involved in any of the above embodiments to complete the forwarding of the AI model. If there is any ambiguity in the following embodiments, references may be made to any of the above embodiments. Similarly, if there is any ambiguity in the above embodiments, references may be made to any of the following embodiments.

Fig. 16 is a flow chart of a communication method according to an example embodiment. As shown in Fig. 16, the communication method is performed by a wireless access network device and includes the following step(s).

In step S151, the AI model sent by the core network device is received.

In an embodiment of the present disclosure, the AI model is sent by the core network device, and the core network device is the providing node for the AI model.

In step S152, the AI model is sent to the terminal.

The terminal is the node that uses the AI model for reasoning.

According to the communication method provided by an embodiment of the present disclosure, the wireless access network device receives the AI model sent by the core network device and forwards it to the terminal, and the terminal is the node that uses the AI model for reasoning. Thus, when the providing node for the AI model and the node that uses the AI model for reasoning are located at different devices, the device carrying the node that uses the AI model for reasoning can smoothly acquire the AI model and perform the reasoning task based on the AI model.

In an embodiment, the AI model may be transmitted between the wireless access network and the core network device through a pre-configured transmission protocol. For the convenience of description below, the transmission protocol for communication between the wireless access network and the core network device is referred to as the seventh transmission protocol.

Fig. 17 is a flow chart of another communication method according to an example embodiment. As shown in Fig. 17, the communication method is performed by the wireless access network device and includes the following step(s).

In step S161, based on the seventh transmission protocol, the AI model sent by the core network device is received.

In an embodiment, the wireless access network device may send the AI model by sending the air interface protocol signaling.

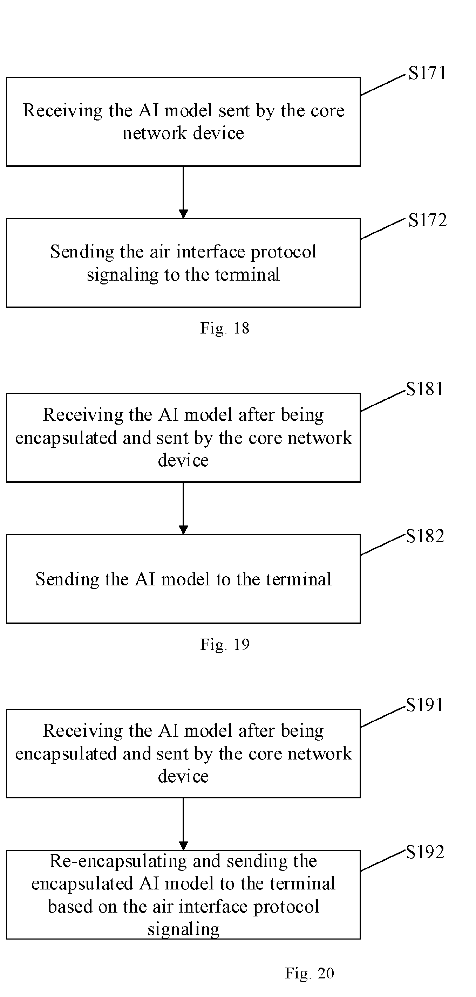

Fig. 18 is a flow chart of another communication method according to an example embodiment. As shown in Fig. 18, the communication method is performed by a wireless access network device and includes the following step(s).

In step S171, the AI model sent by the core network device is received.

The AI model is sent by the core network device, and the core network device is the providing node for the AI model.

In step S172, the air interface protocol signaling is sent to the terminal.

The air interface protocol signaling carries the AI model.

In an embodiment, the core network device may send the encapsulated AI model to the wireless access network device.

Fig. 19 is a flow chart of another communication method according to an example embodiment. As shown in Fig. 19, the communication method is performed by the wireless access network device and includes the following step(s).

In step S181, the AI model is received after being encapsulated and sent by the core network device.

The AI model is sent by the core network device, and the core network device is the providing node for the AI model.

In step S182, the AI model is sent to the terminal.

In an embodiment of the present disclosure, in the case where the core network device encapsulates and sends the AI model, the wireless access network device parses the AI model and re-encapsulates the AI model. In this case, the wireless access network device may send the re-encapsulated AI model to the terminal.

Fig. 20 is a flow chart of another communication method according to an example embodiment. As shown in Fig. 20, the communication method is performed by the wireless access network device, including the following step(s).

In step S191, the AI model is received after being encapsulated and sent by the core network device.

The AI model is sent by the core network device, and the core network device is the providing node for the AI model.

In step S192, based on the air interface protocol signaling, the encapsulated AI model is re-encapsulated and sent to the terminal.

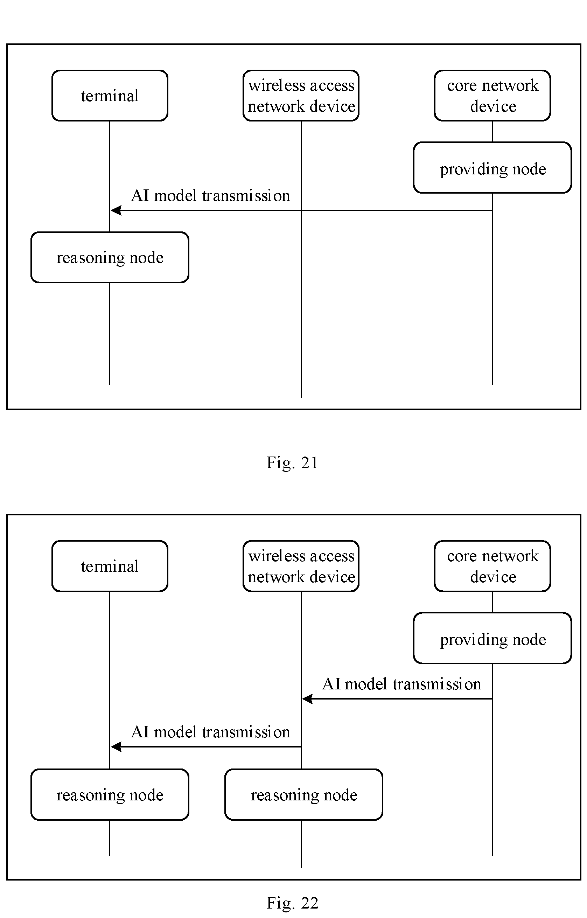

In an embodiment of the present disclosure, the providing node for the AI model is located at the core network device, and the reasoning node for the AI model is located at the terminal. In other words, the AI model required by the terminal to perform the reasoning task is currently stored by the core network device. In the above embodiment, two feasible ways for transmitting the AI model from the core network device to the terminal are provided accordingly, that is, a direct transmission in which the AI model is sent from the core network device to the terminal, and an indirect transmission in which the AI model is sent and forwarded by the wireless access network device to the terminal. For the ease of understanding, the following is an example description of the AI model transmission involved in the embodiments of the present disclosure in conjunction with Figs. 21 and 22.

In an embodiment, as shown in Fig. 21, the AI model may be transmitted from the core network device to the terminal through the NAS signaling interface. For example, NWDAF transmits the AI model stored in itself to AMF, and AMF encapsulates the AI model and then transmits the encapsulated AI model to the terminal through the NAS signaling interface. Alternatively, OAM transmits the AI model stored in itself to AMF, and AMF encapsulates the AI model and then transmits the encapsulated AI model to the terminal through the NAS signaling interface. It shall be noted that NWDAF may also transmit the AI model stored in itself to OAM, and then OAM transmits the AI model to AMF, so that AMF encapsulates the AI model and transmits the encapsulated AI model to the terminal afterwards through the NAS signaling interface.

In addition, the AI model may be transmitted to the terminal by NWDAF or OAM through the UP protocol interface. For example, NWDAF transmits the AI model stored in itself to UPF, and UPF encapsulates the AI model and then transmits the encapsulated AI model to the terminal through the UP protocol interface. Alternatively, OAM transmits the AI model stored in itself to UPF, and UPF encapsulates the AI model and then transmits the encapsulated AI model to the terminal through the UP protocol interface. It shall be noted that NWDAF may also transmit the AI model stored in itself to OAM, and then OAM transmits the AI model to UPF, so that UPF encapsulates the AI model and transmits the encapsulated AI model to the terminal afterwards through the UP protocol interface.

In the above embodiment(s), the AI model is transmitted to the terminal through the NAS signaling interface. For example, the AI model may be carried by NAS signaling, and the NAS signaling may be sent to the terminal through the NAS signaling interface so that the AI model is transmitted to the terminal. Correspondingly, the AI model is transmitted to the terminal through the UP protocol interface. For example, the AI model may be carried by the PDU session information of which the transmission is supported by the UP protocol interface, and then the AI model is transmitted to the terminal by sending the PDU session information to the terminal through the UP protocol interface.

Generally, the AI model has multiple network layers, where each layer includes multiple operation elements, the operation elements of each layer have a certain connection relationship with respect to the operation elements of other layers, and the connection relationship is configured with a respective weight. In an embodiment of the present disclosure, the complete AI model or a partial AI model may be transmitted between the core network device and the terminal. The partial AI model may be understood as the remaining part of the AI model after discarding at least one of one or more network layers, one or more operation elements, one or more connection relationships, and one or more configuration weights. For example, only some of the network layers or some of the operation elements of the AI model, or only the weights between the connecting elements may be transmitted.

In addition, the core network device may also transmit the AI model to the wireless access network device, so that the wireless access network device forwards the AI model to the terminal.

In another embodiment, as shown in Fig. 22, the core network device may send the AI model to the wireless access network device through a dedicated communication interface between the core network device and the wireless access network device. Then, when the AI model is transmitted to the wireless access network device, the wireless access network device re-encapsulates the AI model and transmits the model to the user through the air interface protocol.

In an embodiment, the core network device may transmit the AI model to the wireless access network device based on a dedicated communication interface between the core network device and the wireless access network device. Then, the wireless access network device re-encapsulates the AI model and transmits the AI model to the terminal based on the air interface protocol signaling with the terminal. The air interface protocol signaling between the wireless access network device and the terminal may be, for example, any one of physical layer signaling, logical access layer MAC signaling, radio resource control (RRC) signaling, or air interface user plane signaling.

In a feasible implementation, the core network device transmits the AI model to the wireless access network device. For example, the NWDAF transmits the AI model to the AMF (or Service Management Function (SMF), or UPF), and then transmits the model to the wireless access network device through the dedicated communication interface between the AMF (or SMF, or UPF) and the wireless access network device. For example, the NWDAF transmits the AI model to the AMF, and then the AMF transmits the AI model to the wireless access network device through the dedicated communication interface between the wireless access network and the AMF. For another example, the NWDAF transmits the AI model to the UPF, and then the UPF transmits the AI model to the wireless access network device through the dedicated communication interface between the wireless access network and the UPF.

In an embodiment of the present disclosure, the complete AI model or a partial AI model may be transmitted between the core network device and the terminal. The partial AI model may be understood as the remaining part of the AI model after discarding at least one of one or more network layers, one or more operation elements, one or more connection relationships, and one or more configuration weights. For example, the transmission may be only some of the network layers or some of the operation elements of the AI model, or only the weights between the connecting elements.

In addition, it should be noted that for the scenario where the core network device and the terminal communicate based on the AI model, the current demand is that the core network device provides the AI model required by the terminal to perform the reasoning task. However, in the actual scenario, the terminal may also provide the AI model required by the core network device to perform the reasoning task. That is, the providing node for the AI model is located at the terminal, and the reasoning node for the AI model is located at the core network device. For this scenario, the provisions of the present disclosure on the transmission of the AI model are also applicable. For example, the terminal may send the AI model to the core network device through the communication interface between the terminal and the core network device. For another example, the terminal may send the AI model to the wireless access network device through the air interface protocol signaling, and the wireless access network device sends the AI model to the core network device through the communication interface between the wireless access network device and the core network device.

It should be noted that those skilled in the art may understand, the various implementations/embodiments involved in the above-mentioned embodiments of the present disclosure may be used in conjunction with the aforementioned embodiments or may be used independently. Whether used alone or in conjunction with the aforementioned embodiments, the implementation principles are similar. In the embodiments of the present disclosure, some embodiments are described in terms of implementations used together. It shall be noted that those skilled in the art may understand, such examples are not limitations on the embodiments of the present disclosure.

Based on the same concept, the embodiments of the present disclosure also provide a communication apparatus.

It can be understood that the communication apparatus provided in the embodiments of the present disclosure includes hardware structures and/or software modules corresponding to the execution of each function in order to implement the above-mentioned functions. In connection with the units and algorithm steps of the various examples disclosed in the embodiments of the present disclosure, the embodiments of the present disclosure may be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to go beyond the scope of the technical solution of the embodiments of the present disclosure.

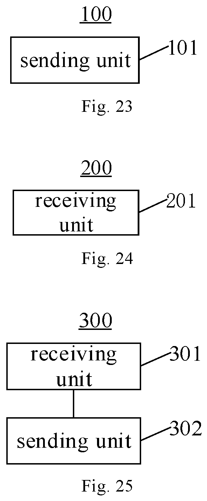

Fig. 23 is a block diagram of a communication apparatus according to an example embodiment. Referring to Fig. 23, the communication apparatus 100 includes a sending unit 101.

The sending unit 101 is configured to send the AI model to the terminal. The terminal is a node that uses the AI model for reasoning.

In an embodiment, the sending unit 101 sends the AI model to the terminal in the following way: sending the AI model to the terminal based on the first transmission protocol. The first transmission protocol is a transmission protocol for communication between the core network device and the terminal.

In an embodiment, the sending unit 101 is configured to send the AI model to the terminal based on the first transmission protocol in the following way: encapsulating the AI model based on the first transmission protocol, and sending the encapsulated AI model to the terminal.

In an embodiment, the first transmission protocol includes a Non-Access Stratum (NAS) signaling protocol and/or a User Plane (UP) protocol.

In an embodiment, the providing node for the AI model is located at the NWDAF. The sending unit 101 is configured to send the AI model to the terminal based on the first transmission protocol in the following way: NWDAF sending the AI model to AMF based on the second transmission protocol, and AMF encapsulating the AI model based on the Non-Access Stratum (NAS) signaling protocol and sending the encapsulated AI model to the terminal; or NWDAF sending the AI model to OAM based on the third transmission protocol, OAM sending the AI model to AMF based on the fourth transmission protocol, and AMF encapsulating the AI model based on the NAS signaling protocol and sending the encapsulated AI model to the terminal; or NWDAF sending the AI model to the User Plane Function (UPF) based on the fifth transmission protocol, and UPF encapsulating the AI model based on the UP protocol and sending the encapsulated AI model to the terminal. The second transmission protocol is the transmission protocol for communication between NWDAF and AMF, the third transmission protocol is the transmission protocol for communication between NWDAF and OAM, the fourth transmission protocol is the transmission protocol for communication between OAM and AMF, and the fifth transmission protocol is the transmission protocol for communication between NWDAF and UPF.

In an embodiment, the providing node for the AI model is located at OAM. The sending unit 101 is configured to send the AI model to the terminal based on the first transmission protocol in the following way: OAM sending the AI model to AMF based on the fourth transmission protocol, and AMF encapsulating the AI model based on the NAS signaling protocol and sending the encapsulated AI model to the terminal; or OAM sending the AI model to UPF based on the sixth transmission protocol, and UPF encapsulating the AI model based on the UP protocol and sending the encapsulated AI model to the terminal. The fourth transmission protocol is a transmission protocol for communication between OAM and AMF, and the sixth transmission protocol is a transmission protocol for communication between OAM and UPF.

In an embodiment, the sending unit 101 is configured to send the AI model to the terminal in the following way: sending the AI model to the wireless access network device based on the seventh transmission protocol. The seventh transmission protocol is a transmission protocol for communication between the core network device and the wireless access network device. The AI model is sent to the terminal by the wireless access network device.

In an embodiment, the sending unit 101 is configured to send the AI model to the wireless access network device in the following way: encapsulating the AI model based on the seventh transmission protocol, and sending the encapsulated AI model to the wireless access network device.

Fig. 24 is a block diagram of a communication apparatus according to an example embodiment. Referring to Fig. 24, the communication apparatus 200 includes a receiving unit 201.

The receiving unit 201 is configured to receive the AI model sent by the core network device. The core network device is the providing node for the AI model.

In an embodiment, the receiving unit 201 receives the AI model sent by the core network device in the following way: receiving the AI model sent by the core network device based on the first transmission protocol. The first transmission protocol is a transmission protocol for communication between the core network device and the terminal.

In an embodiment, the first transmission protocol includes a Non-Access Stratum (NAS) signaling protocol and/or a UP protocol.

In an embodiment, the providing node for the AI model is located at the NWDAF. The receiving unit 201 is configured to receive the AI model sent by the core network device based on the first transmission protocol in the following way: receiving the AI model encapsulated and sent by the AMF based on the NAS signaling protocol, where the AI model is sent to the AMF by the NWDAF, or forwarded from the NWDAF to the AMF by the OAM; or receiving the AI model encapsulated and sent by the UPF based on the User Plane (UP) protocol, where the AI model is sent to the UPF by the NWDAF.

In an embodiment, the providing node for the AI model is located at the OAM. The receiving unit 201 is configured to receive the AI model sent by the core network device based on the first transmission protocol in the following way: receiving the AI model encapsulated and sent by AMF based on the NAS signaling protocol, where the AI model is sent to AMF by OAM; or receiving the AI model encapsulated and sent by UPF based on the UP protocol, where the AI model is sent to UPF by OAM.

In an embodiment, the receiving unit 201 is configured to receive the AI model sent by the core network device in the following way: receiving the AI model sent by the wireless access network device. The AI model is sent to the wireless access network device by the core network device.

In an embodiment, the receiving unit 201 is configured to receive the AI model sent by the wireless access network device in the following way: receiving the air interface protocol signaling sent by the wireless access network device. The air interface protocol signaling carries the AI model.

In an embodiment, the air interface protocol signaling includes at least one of the following: physical layer signaling, logical access layer MAC signaling, Radio Resource Control (RRC) signaling, or air interface user plane signaling.

Fig. 25 is a block diagram of a communication apparatus according to an example embodiment. Referring to Fig. 25, the communication apparatus 300 includes a receiving unit 301 and a sending unit 302.

According to a sixth aspect of the embodiments of the present disclosure, a communication apparatus is provided, including a receiving unit 301 and a sending unit 302.

The receiving unit 301 is configured to receive an AI model, where the AI model is sent by a core network device, and the core network device is a providing node for the AI model. The sending unit 302 is configured to send the AI model to a terminal, where the terminal is a node that uses the AI model for reasoning.

In an embodiment, the receiving unit 301 is configured to receive the AI model in the following way: receiving the AI model sent by the core network device based on the seventh transmission protocol. The seventh transmission protocol is a transmission protocol for communication between the core network device and the wireless access network device.

In an embodiment, the sending unit 302 is configured to send the AI model to the terminal in the following way: sending the air interface protocol signaling to the terminal, where the air interface protocol signaling carries the AI model.

Regarding the apparatus in the above embodiment(s), the specific way in which each module performs the operation has been described in detail in the method embodiment(s), and will not be elaborated here.

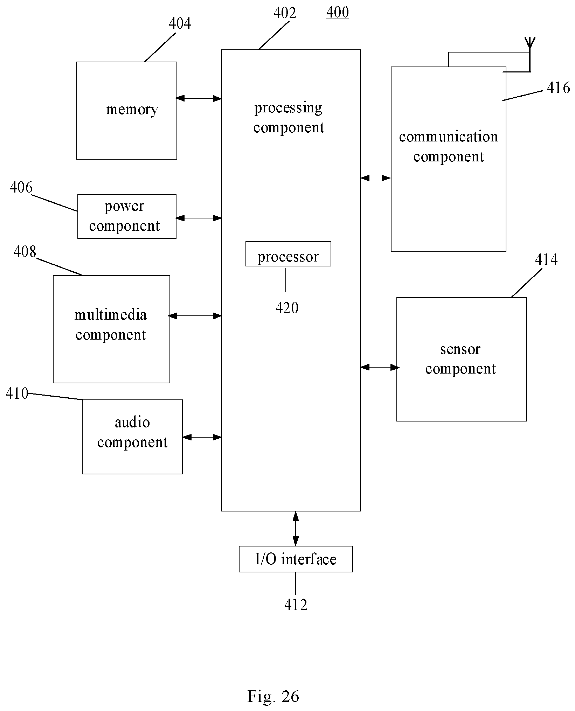

Fig. 26 is a block diagram of a communication device 400 shown according to an example embodiment. For example, the communication device 400 may be a mobile phone, a computer, a digital broadcast terminal, a messaging device, a game console, a tablet device, a medical device, a fitness device, a personal digital assistant, etc.

With reference to Fig. 26, the communication device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls the overall operation of the communication device 400, such as operations associated with display, phone calls, data communications, camera operations, and recording operations. The processing component 402 may include one or more processors 420 to execute instructions so that all or some of the steps of the above-mentioned method are implemented. In addition, the processing component 402 may include one or more modules to facilitate interactions between the processing component 402 and other components. For example, the processing component 402 may include a multimedia module to facilitate interactions between the multimedia component 408 and the processing component 402.

The memory 404 is configured to store various types of data to support operations on the communication device 400. Examples of such data include instructions for any application or method operating on the communication device 400, contact data, phone book data, messages, pictures, videos, etc. The memory 404 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The power component 406 provides power to various components of the communication device 400. The power component 406 may include a power management system, one or more power supplies, and other components associated with generating, managing, and distributing power for the communication device 400.

The multimedia component 408 includes a screen that provides an output interface between the communication device 400 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundaries of a touch or slide operation, but also detect the duration and pressure associated with the touch or slide operation. In some embodiments, the multimedia component 408 includes a front camera and/or a rear camera. When the communication device 400 is in an operation mode, such as a shooting mode or a video mode, the front camera and/or the rear camera can receive external multimedia data. Each of the front camera and the rear camera may be a fixed optical lens system or have a focal length and the optical zooming capability.

The audio component 410 is configured to output and/or input audio signals. For example, the audio component 410 includes a microphone (MIC). When the communication device 400 is in an operation mode, such as a call mode, a recording mode, and a voice recognition mode, the microphone is configured to receive an external audio signal. The received audio signal may be further stored in the memory 404 or sent via the communication component 416. In some embodiments, the audio component 410 also includes a speaker for outputting audio signals.

The I/O interface 412 provides an interface between the processing component 402 and the peripheral interface module. The peripheral interface module may be a keyboard, a click wheel, buttons, etc. These buttons may include, but are not limited to, a home button, a volume button, a start button, and a lock button.

The sensor assembly 414 includes one or more sensors for providing various aspects of the status assessment of the communication device 400. For example, the sensor assembly 414 may detect the on/off state of the communication device 400, the relative positioning of components such as the display and keypad of the communication device 400. The sensor assembly 414 may also detect the position change of the communication device 400 or a component of the communication device 400, the presence or absence of user contact with the communication device 400, the orientation or acceleration/deceleration of the communication device 400, and the temperature change of the communication device 400. The sensor assembly 414 may include a proximity sensor configured to detect the presence of nearby objects without any physical contact. The sensor assembly 414 may also include a light sensor, such as a CMOS or CCD image sensor, for use in imaging applications. In some embodiments, the sensor assembly 414 may also include an acceleration sensor, a gyroscope sensor, a magnetic sensor, a pressure sensor, or a temperature sensor.

The communication component 416 is configured to facilitate the wired or wireless communication between the communication device 400 and other devices. The communication device 400 may access a wireless network based on a communication standard, such as WiFi, 2G or 3G, or a combination thereof. In an example embodiment, the communication component 416 receives a broadcast signal or broadcast related information from an external broadcast management system via a broadcast channel. In an example embodiment, the communication component 416 also includes a Near Field Communication (NFC) module to facilitate short-range communication. For example, the NFC module may be implemented based on Radio Frequency Identification (RFID) technology, Infrared Data Association (IrDA) technology, Ultra-WideBand (UWB) technology, Bluetooth (BT) technology, and other technologies.

In an example embodiment, the communication device 400 may be implemented by one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the above method(s).

In an example embodiment, a non-transitory computer-readable storage medium including instructions is also provided, such as a memory 404 including instructions, and the above instructions may be executed by a processor 420 of the communication device 400 to complete the above method(s). For example, the non-transitory computer-readable storage medium may be a ROM, a Random Access Memory (RAM), a CD-ROM, a tape, a floppy disk, an optical data storage device, etc.

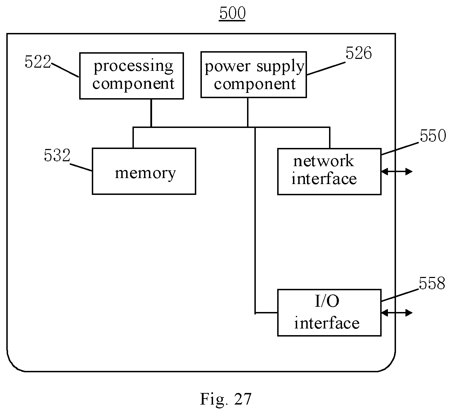

Fig. 27 is a block diagram of a communication device 500 according to an example embodiment. For example, the communication device 500 may be provided as a server. Referring to Fig. 27, the communication device 500 includes a processing component 522, which further includes one or more processors, and a memory resource represented by a memory 532 for storing instructions executable by the processing component 522, such as an application. The application stored in the memory 532 may include one or more modules each corresponding to a set of instructions. In addition, the processing component 522 is configured to execute instructions to perform the above-mentioned communication method(s).

The communication device 500 may also include a power supply component 526 configured to perform power management for the communication device 500, a wired or wireless network interface 550 configured to connect the communication device 500 to a network, and an input/output (I/O) interface 558. The communication device 500 may operate based on an operation system stored in the memory 532, such as Windows ServerTM, Mac OS XTM, UnixTM, LinuxTM, FreeBSDTM, or the like.

In an example embodiment, a non-transitory computer-readable storage medium including instructions is also provided, such as a memory 532 including instructions, and the instructions may be executed by the processing component 522 of the communication device 500 to perform the above method(s). For example, the non-transitory computer-readable storage medium may be a ROM, a Random Access Memory (RAM), a CD-ROM, a magnetic tape, a floppy disk, an optical data storage device, etc.

It is further understood that in the present disclosure, "multiple" refers to two or more, and other quantifiers are similar. "And/or" describes the association relationship among the associated objects, indicating that three relationships may exist. For example, A and/or B may represent: A exists alone, A and B exist at the same time, and B exists alone. The character "/" generally indicates that the objects associated before and after it are in an "or" relationship. The singular forms of "a", "an", and "the" are also intended to include plural forms, unless the context clearly indicates other meanings.

It is further understood that the meaning of words such as "in response to" or "if" involved in the present disclosure depends on the context and the actual use scenario. For example, the word "in response to" used herein may be interpreted as "at" or "when" or "if".

It is further understood that the terms "first", "second", etc. are used to describe various information, but these information should not be limited to these terms. These terms are only used to distinguish the same type of information from each other, and do not indicate a specific order or degree of importance. In fact, the expressions "first", "second", etc. may be used interchangeably. For example, without departing from the scope of the present disclosure, the first information may also be referred to as the second information, and similarly, the second information may also be referred to as the first information.

It is further understood that although the operations are described in a specific order in the drawings according to the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

After considering the specification and practicing the content disclosed herein, it will be easy for those skilled in the art to think of other embodiments of the present disclosure. The present application is intended to cover any variations, uses, or adaptations of the present disclosure that follow the general principles of the present disclosure and include common knowledge or conventional technical means in the art that are not disclosed in the present disclosure.

It should be understood that the present disclosure is not limited to the precise structures described above and shown in the drawings, and various modifications and changes may be made without departing from the scope of the present disclosure. The scope of the present disclosure is limited only by the scope of the attached rights.

## Claims

1. A communication method, performed by a core network device, wherein the core network device is a providing node for an Artificial Intelligence (AI) model, and the communication method comprises:
sending the AI model to a terminal, wherein
the terminal is a node that uses the AI model for reasoning.

2. The communication method according to claim 1, wherein sending the AI model to the terminal comprises:
sending the AI model to the terminal based on a first transmission protocol, wherein
the first transmission protocol is a transmission protocol for communication between the core network device and the terminal.

3. The communication method according to claim 2, wherein sending the AI model to the terminal based on the first transmission protocol comprises:
encapsulating the AI model based on the first transmission protocol, and sending the encapsulated AI model to the terminal.

4. The communication method according to claim 2 or 3, wherein the first transmission protocol comprises at least one of a Non-Access Stratum (NAS) signaling protocol or a User Plane (UP) protocol.

5. The communication method according to claim 4, wherein
the providing node for the AI model is located at a Network Data Analytics Function (NWDAF); and
sending the AI model to the terminal based on the first transmission protocol comprises:
the NWDAF sending the AI model to an Access and Mobility Management Function (AMF) based on a second transmission protocol, and the AMF encapsulating the AI model based on the NAS signaling protocol and sending the encapsulated AI model to the terminal; or
the NWDAF sending the AI model to Operation Administration and Maintenance (OAM) based on a third transmission protocol, the OAM sending the AI model to the AMF based on a fourth transmission protocol, and the AMF encapsulating the AI model based on the NAS signaling protocol and sending the encapsulated AI model to the terminal; or
the NWDAF sending the AI model to a User Plane Function (UPF) based on a fifth transmission protocol, and the UPF encapsulating the AI model based on the UP protocol and sending the encapsulated AI model to the terminal, wherein
the second transmission protocol is a transmission protocol for communication between the NWDAF and the AMF, the third transmission protocol is a transmission protocol for communication between the NWDAF and the OAM, the fourth transmission protocol is a transmission protocol for communication between the OAM and the AMF, and the fifth transmission protocol is a transmission protocol for communication between the NWDAF and the UPF.

6. The communication method according to claim 4, wherein
the providing node for the AI model is located at OAM;
sending the AI model to the terminal based on the first transmission protocol comprises:
the OAM sending the AI model to an AMF based on a fourth transmission protocol, and the AMF encapsulating the AI model based on the NAS signaling protocol and sending the encapsulated AI model to the terminal; or
the OAM sending the AI model to a UPF based on a sixth transmission protocol, and the UPF encapsulating the AI model based on the UP protocol and sending the encapsulated AI model to the terminal, wherein
the fourth transmission protocol is a transmission protocol for communication between the OAM and the AMF, and the sixth transmission protocol is a transmission protocol for communication between the OAM and the UPF.

7. The communication method according to claim 1, wherein sending the AI model to the terminal comprises:
sending the AI model to a wireless access network device based on a seventh transmission protocol, wherein
the seventh transmission protocol is a transmission protocol for communication between the core network device and the wireless access network device; and
the AI model is sent to the terminal by the wireless access network device.

8. The communication method according to claim 7, wherein sending the AI model to the wireless access network device comprises:
encapsulating the AI model based on the seventh transmission protocol, and sending the encapsulated AI model to the wireless access network device.

9. A communication method, performed by a terminal, wherein the terminal is a node that uses an Artificial Intelligence (AI) model for reasoning, and the communication method comprises:
receiving the AI model sent by a core network device, wherein
the core network device is a providing node for the AI model.

10. The communication method according to claim 9, wherein receiving the AI model sent by the core network device comprises:
receiving the AI model sent by the core network device based on a first transmission protocol, wherein
the first transmission protocol is a transmission protocol for communication between the core network device and the terminal.

11. The communication method according to claim 10, wherein
the first transmission protocol comprises at least one of a NAS signaling protocol or a UP protocol.

12. The communication method according to claim **11,** wherein
the providing node for the AI model is located at a NWDAF; and
receiving the AI model sent by the core network device based on the first transmission protocol comprises:
receiving the AI model encapsulated and sent by an AMF based on the NAS signaling protocol, wherein the AI model is sent to the AMF by the NWDAF or forwarded from the NWDAF to the AMF by OAM; or
receiving the AI model encapsulated and sent by a UPF based on the UP protocol, wherein the AI model is sent to the UPF by the NWDAF.

13. The communication method according to claim 11, wherein
the providing node for the AI model is located at OAM; and
receiving the AI model sent by the core network device based on the first transmission protocol comprises:
receiving the AI model encapsulated and sent by an AMF based on the NAS signaling protocol, wherein the AI model is sent to the AMF by the OAM; or
receiving the AI model encapsulated and sent by a UPF based on the UP protocol, wherein the AI model is sent to the UPF by the OAM.

14. The communication method according to claim 10, wherein receiving the AI model sent by the core network device comprises:
receiving the AI model sent by the wireless access network device, wherein
the AI model is sent to the wireless access network device by the core network device.

15. The communication method according to claim 14, wherein receiving the AI model sent by the wireless access network device comprises:
receiving an air interface protocol signaling sent by the wireless access network device, wherein
the air interface protocol signaling carries the AI model.

16. The communication method according to claim 15, wherein the air interface protocol signaling comprises at least one of:
physical layer signaling;
logical access layer MAC signaling;
Radio Resource Control (RRC) signaling; or
air interface user plane signaling.

17. A communication method, performed by a wireless access network device, the method comprising:
receiving an AI model, wherein the AI model is sent by a core network device, and the core network device is a providing node for the AI model; and
sending the AI model to a terminal, wherein the terminal is a node that uses the AI model for reasoning.

18. The communication method according to claim 17, wherein receiving the AI model comprises:
receiving the AI model sent by the core network device based on a seventh transmission protocol, wherein
the seventh transmission protocol is a transmission protocol for communication between the core network device and the wireless access network device.

19. The communication method according to claim 18, wherein sending the AI model to the terminal comprises:
sending air interface protocol signaling to the terminal, wherein the air interface protocol signaling carries the AI model.

20. A communication apparatus, applied to a core network device, wherein the core network device is a providing node for an AI model, and the communication apparatus comprises:
a sending unit, configured to send the AI model to a terminal, wherein
the terminal is a node that uses the AI model for reasoning.

21. A communication apparatus, applied to a terminal, wherein the terminal is a node that uses an AI model for reasoning, and the communication apparatus comprises:
a receiving unit, configured to receive the AI model sent by a core network device, wherein
the core network device is a providing node for the AI model.

22. A communication apparatus, applied to a wireless access network device, and the apparatus comprises:
a receiving unit, configured to receive an AI model, wherein the AI model is sent by a core network device, and the core network device is a providing node for the AI model; and
a sending unit, configured to send the AI model to a terminal, wherein the terminal is a node that uses the AI model for reasoning.

23. A communication system, comprising a terminal, a wireless access network device, and a core network device, wherein
the core network device is configured to perform the communication method according to any one of claims 1 to 8;
the terminal is configured to perform the communication method according to any one of claims 9 to 16; and
the wireless access network device is configured to perform the communication method according to any one of claims 17 to 19.

24. A communication device, comprising:
a processor; and
a memory, having processor-executable instructions stored therein, wherein
the processor is configured to perform the communication method according to any one of claims 1 to 8.

25. A communication device, comprising:
a processor; and
a memory, having processor-executable instructions stored therein, wherein
the processor is configured to perform the communication method according to any one of claims 9 to 16.

26. A communication device, comprising:
a processor; and
a memory, having processor-executable instructions stored therein, wherein
the processor is configured to perform the communication method according to any one of claims 17 to 19.

27. A storage medium, having instructions stored therein, wherein when the instructions in the storage medium are executed by a processor, the processor is enabled to perform the communication method according to any one of claims 1 to 8.

28. A storage medium, having instructions stored therein, wherein when the instructions in the storage medium are executed by a processor, the processor is enabled to perform the communication method according to any one of claims 9 to 16.

29. A storage medium, having instructions stored therein, wherein when the instructions in the storage medium are executed by a processor, the processor is enabled to perform the communication method according to any one of claims 17 to 19.
